# EUROPEAN PATENT APPLICATION

(11) **EP 1 816 578 A2**
(43) Date of publication of application: **08.08.2007**
(21) Application number: 07001263.8
(22) Date of filing: 22.01.2007
(51) Int. Cl.: G06F 21/00

(54) **Method and apparatus for limiting the ability of a user device to replay content**

(30) Priority: 01.02.2006 US 764017 P; 14.09.2006 US 531871
(71) Applicant: GENERAL INSTRUMENT CORPORATION, Horsham, Pennsylvania 19044 (US)
(72) Inventor: Kravitz, David William, Fairfax Virginia 22031 (US); Muthuswamy, Sivakumar, Tower Lakes Illinois 60010 (US); Scherer, Steve A., Mundelein Illinois 60060 (US)
(74) Representative: Openshaw, Paul Malcolm

(57) **Abstract**

A method and an apparatus are provided for use in a user device for limiting the ability of the terminal of the user device to replay protected content. The low-level key that is used by the decryption component of the terminal to decrypt content is transient in that it expires if at least one predetermined expiration criteria is met. After they key has expired, it is no longer valid and thus cannot be used by the decryption component to decrypt protected content. Limiting the ability of the terminal to replay protected content is preferably accomplished in a way that does not affect the ability of the terminal to play and replay unprotected content.

## Description

### CROSS-REFERENCE TO RELATED APPLICATIONS

This application claims priority to provisional application Serial No. 60/764,017, entitled "A SECURE METHOD FOR CONTROLLING CONTENT KEY OR APPLICATION KEY EXPIRATION", filed on February 1,2006, which is incorporated herein by reference in its entirety.

### TECHNICAL FIELD OF THE INVENTION

The invention relates to ways of limiting the ability of a terminal of a user device to replay content.

### BACKGROUND OF THE INVENTION

Many user devices, such as set-top boxes, wireless telephones and personal digital assistants (PDAs), laptop computers, and PCs have the capability of rendering content. The term "content" is used in the broadcast and communications industries to denote digital files, such as, for example, video files (e.g., movies, video games, etc.), audio files (e.g., music, audio books, audio news articles, etc.), image files, and text files. Content is distributed by a content provider to wireless user devices over wireless networks. The wireless user devices typically have one or more content renderers on them, such as media player application programs, which render the content (e.g., display the content on a display device and/or playback the content on an audio playback device). For example, a cable television provider or multiple service operator (MSO) may allow a user (typically a paying customer) to download or stream a movie that the user then watches on a wireless telephone. Similarly, an Internet online service may allow a user (typically a paying customer) to download content files, such as new articles, video games, music, etc., to a wireless device for playback or rendering by an appropriate media player program residing on the wireless device.

Content providers manage the distribution of content (e.g., downloading, streaming, etc.) by using one or more of a variety of digital rights management (DRM) techniques. DRM techniques are used to prevent unauthorized users from gaining access to content while allowing authorized users to access the content. This is typically accomplished by encrypting the content when it is distributed to the authorized user, and providing the user with a key or keys, which allow the user's device to decrypt the content so that it can be rendered. DRM, however, encompasses more than securing content from unauthorized access. It also encompasses describing, identifying, trading, monitoring, and tracking of all forms of rights usages over both tangible and intangible assets. The term "tangible assets" refers to physical content, whereas the term "intangible assets" generally refers to copyrights in the content held by copyrights holders.

A typical conditional access (CA) system uses Entitlement Management Messages (EMMs), Entitlement Control Messages (ECMs) transmitted over the communications channel to provide DRM protection. A key stored in a Universal Integrated Circuit Card (UICC), such as a Subscriber Identity Module (SIM) integrated circuit (IC) card, for example, is used to obtain a service key from an EMM. This service key is then used by the UICC to obtain a Control Word (CW) from an ECM, which the UICC delivers to the terminal of the user device that contains the UICC. The terminal of the user device stores the CW and subsequently uses it to decrypt content files. The terminal of the user device typically never has access to the service key.

Although the CWs are provided to the user device, various techniques are used or have been proposed to prevent the CWs from being accessible by the user. For example, Patent Application Publication No. US 2004/0157584 discloses a method for establishing and managing a trust relationship between a subscriber identity module (SIM) integrated circuit (IC) of a mobile device and the terminal of the mobile device. A trust key is used to encrypt exchanges between the SIM IC and the terminal. These exchanges include exchanges of the decryption keys (i.e., the CWs) that are used by the terminal to decrypt protected content. The trust key is stored in the SIM IC memory and in the terminal memory. Prior to any messages being exchanged between the SIM IC and the terminal memory, an authentication process is used to authenticate the terminal to ensure that the SIM IC only exchanges with an authorized terminal. Encrypting the messages that are sent from the SIM IC to the terminal prevents users from being able to access the CWs contained in the messages. For further protection, the trust keys have a lifetime such that they expire after a particular limit date in time has been reached. After a trust key expires, it must be updated in order to enable the SIM IC and the terminal to communicate with each other.

While expiration of the trust key prevents the SIM IC and the terminal from being able to communicate with each other, this does not prevent the terminal from using a CW previously received from the SIM IC to decrypt and replay content that is already in the terminal. Thus, simply removing the SIM IC will not prevent the decrypting and replaying of content by the terminal.

In many cases, it is undesirable to allow the terminal to have the ability to replay content for an indefinite period of time after. It would be useful to provide a way to limit the ability of a terminal to replay protected content. However, limiting the ability of the terminal to replay protected content should not limit the ability of the terminal to replay unprotected content. Accordingly, a need exists for a way to limit the ability of a terminal to replay protected content without limiting the ability of the terminal to replay unprotected content.

### SUMMARY OF THE INVENTION

The invention provides a method and an apparatus for use in a user device for limiting the ability of the user device to replay protected content. The apparatus comprises at least a first processor configured to perform an algorithm that limits the ability of the user device to use a low-level key to decrypt protected content, at least a first memory element accessible by the first processor, and a decryption component configured to receive a valid low-level key from the first processor and use the valid low-level key to decrypt protected content. The low-level key is valid until at least one predetermined expiration criteria is met and can be used to decrypt protected content while the key is valid. The low-level key expires and becomes invalid after the predetermined expiration criteria is met and cannot be used to decrypt protected content while the key is invalid.

The method comprises performing an algorithm that limits the ability of the user device to use a low-level key to decrypt protected content. The low-level key is valid until at least one predetermined expiration criteria is met and can be used to decrypt protected content while the key is valid. The low-level key expires and thus becomes invalid after the predetermined expiration criteria is met and cannot be used to decrypt protected content while the key is invalid.

These and other features and advantages of the invention will become apparent from the following description, drawings and claims.

### BRIEF DESCRIPTION OF THE DRAWINGS

FIG. 1 illustrates a block diagram of the user device 1 of the invention in accordance with an exemplary embodiment.

FIGS. 2A and 2B illustrate flowcharts that represent the method of the invention in accordance with one exemplary embodiment performed by the UICC and by the terminal, respectively, for limiting the ability of a terminal to replay protected content.

FIGS. 3A and 3B illustrate flowcharts that represent the method of the invention in accordance with another exemplary embodiment performed by the UICC and by the terminal, respectively, for limiting the ability of a terminal to replay protected content.

### DETAILED DESCRIPTION OF EXEMPLARY EMBODIMENTS

In accordance with the invention, the ability of a terminal of a user device to replay protected content is limited by using one or more techniques. The low-level key that is used by the decryption component of the terminal to decrypt content is transient in that it expires if at least one predetermined expiration criteria is met. After the key has expired, it is no longer valid and thus cannot be used by the decryption component to decrypt protected content. Limiting the ability of the terminal to replay protected content is preferably accomplished in a way that does not affect the ability of the terminal to play and replay unprotected content.

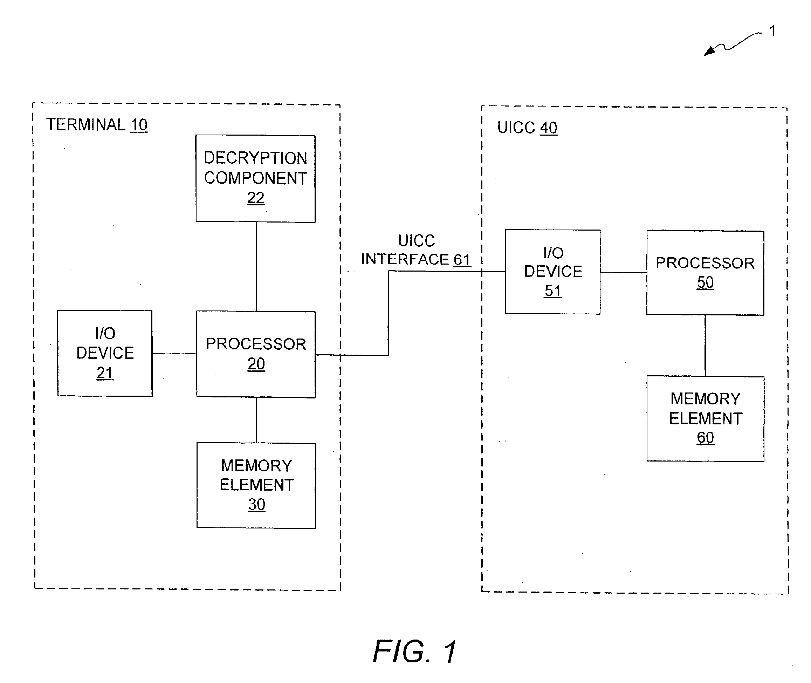

FIG. 1 illustrates a block diagram of the user device 1 of the invention in accordance with an exemplary embodiment. The user device 1 may be any type of device that is used to render content, such as, for example, a wireless telephone, a wireless PDA, a television set-top box, or other handheld device. The invention is not limited with respect to the type of user device with which the invention is used.

The user device 1 comprises a terminal 10 and a UICC 40, which may be, for example, a SIM IC contained on a SIM card. The terminal 10 includes a processor 20, a memory element 30 an input/output (I/O) device 21, and a decryption component 22. The UICC 40 includes a processor 50, a memory element 60 and an I/O device 51. The terminal 10 and the UICC 40 communicate with each other via a UICC interface 61.

An example of the manner in which the user device 1 operates on protected content will now be described. The UICC 40 includes a key that is either coded in the processor 50 and/or stored in memory element 60 at the time of manufacture of the UICC 40 or at some other time prior to distribution of the UICC 40. During an authorization session with a content service provider (not shown), this key is used by the UICC 40 in the known manner described above to obtain a service key or program key from an appropriate EMM. Alternatively, as is known in the art, a shared secret value embedded in the UICC 40 prior to distribution of the UICC 40 is used to bootstrap this key. This has the advantage that a plurality of content service providers can use the identical UICC 40 without learning one another's keys and without embedding content service provider- specific keys in the UICC 40 prior to its distribution. The distribution and use of EMMs can be independent of the particular mechanism by which the UICC 40 obtains access to the key used to process those EMMs, and thereby to obtain access to service or program keys. As is known in the art, a service key is obtained when the content corresponds to a particular service offered by the service provider whereas a program key is obtained when the content corresponds to a particular program offered by the service provider. More particularly, content corresponding to a particular program may be associated with a program key, where a user may have a choice of paying for the individual program or subscribing to a service that includes access to that program. In the latter case, the service key may be used to access the program key. For ease of demonstrating the principles and concepts of the invention, both service keys and program keys will be referred to simply as high-level keys.

Once the UICC 40 has obtained the high-level key, the UICC 40 uses the high-level key in the known manner described above to obtain a CW from an ECM. The UICC 40 then stores the CW in memory element 60. The CW is a low-level key that is later used by the terminal 10 to unlock (i.e., decrypt) protected content or application programs in order to enable the content to be rendered or the application program to be executed by the user device 1. The CW is referred to hereinafter as the "low-level key". For ease of illustration and discussion, the term "protected content", as that term is used herein, is intended to denote encrypted content and/or encrypted application programs.

After the decryption has been stored in the memory device 60 of the UICC 40, one or more techniques of the invention are used by the terminal 10 and/or the UICC 40 to limit the ability of the terminal 10 to replay protected content. These techniques will now be described with reference to a few exemplary embodiments. It should be noted, however, that the invention is not limited to these exemplary embodiments, as will be understood by persons skilled in the art in view of the description being provided herein.

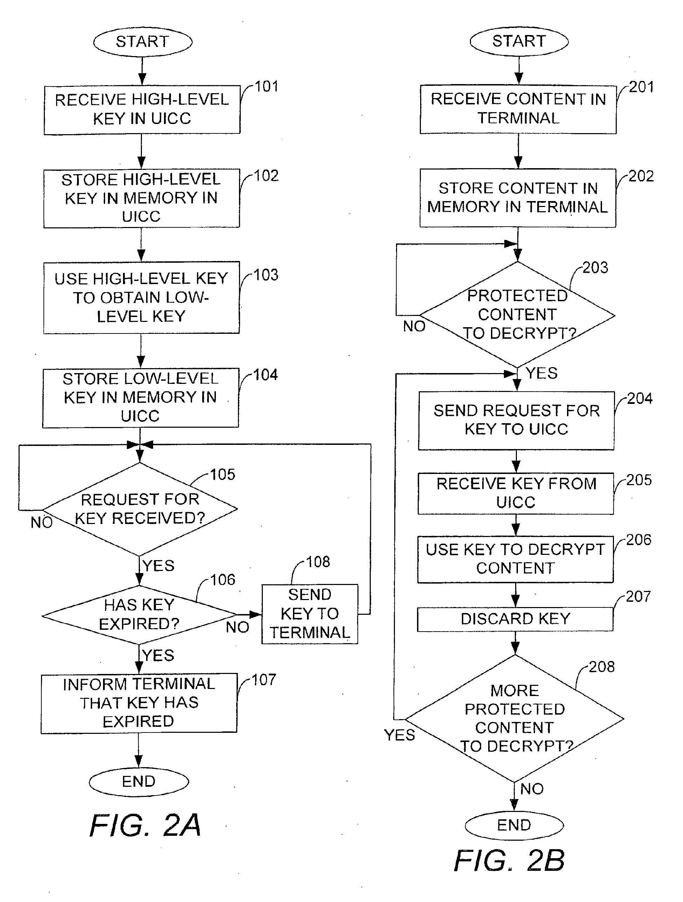

FIGS. 2A and 2B illustrate flowcharts that represent the method of the invention in accordance with one exemplary embodiment performed by the UICC and by the terminal, respectively, for limiting the ability of a terminal to replay protected content. In accordance with this embodiment, the low-level key is never stored in memory in the terminal, but is only stored in memory in the UICC. The low-level key is transient in nature in that it has a life that expires when at least one predetermined expiration criteria is met. The predetermined expiration criteria may be one or more of, for example, the passing of a particular amount of time, usage of a low-level key a particular number of times, decryption of a particular amount of content, etc.

In addition to the low-level key being transient, every time the terminal needs to decrypt protected content, the terminal must first obtain the associated low-level key from the UICC. After the low-level key has been used to decrypt protected content, the low-level key is not retained by the terminal, and thus cannot subsequently be used by the terminal to decrypt protected content. Because the terminal must obtain the low-level key every time it needs to decrypt protected content, and because the low-level key is transient, the ability of the terminal to replay protected content is limited. The degree to which the ability of the terminal to decrypt content is limited is controllable in that it depends on the predetermined expiration criteria.

With reference to FIGS. 2A and 2B, when the user device receives protected content and the high-level key from some source, the high-level key is received in the UICC, as indicated by block 101 in FIG. 2A. The source of the content and high-level key may be, for example, a cable television provider, an MSO, a content server in a wired or wireless network, a content server on the Internet, another user device, etc. The content is received in the terminal, as indicated by block 201 in FIG. 2B. The high-level key is stored in memory in the UICC, as indicated by block 102 in FIG. 2A. The UICC uses the high-level key to obtain the low-level key, as indicated by block 103 in FIG. 2A. As described above, the high-level key is used by the UICC to obtain the low-level keys from the ECMs. The low-level key is stored in memory in the UICC, as indicated by block 104 in FIG. 2A. The content is stored in memory in the terminal, as indicated by block 202 in FIG. 2B.

A determination is made by the terminal as to whether any protected content is to be decrypted, as indicated by block 203 in FIG. 2B. If so, the terminal sends a request for the corresponding low-level key to the UICC, as indicated by block 204 in FIG. 2B. The UICC makes a determination as to whether a request for a key has been received from the terminal, as indicated by block 105 in FIG. 2A. If so, the UICC makes a determination as to whether the key has expired, as indicated by block 106 in FIG. 2A. If so, the UICC informs the terminal that the key has expired, as indicated by block 107 in FIG. 2A. If the key has not expired, the UICC retrieves the key from memory and sends it to the terminal during a secure session between the UICC and the terminal, as indicated by block 108 in FIG. 2A. The process then returns to block 105 in FIG. 2A.

The terminal receives the low-level key from the UICC, as indicated by block 205 in FIG. 2B. The terminal uses the low-level key to decrypt the protected content, as indicated by block 206 in FIG. 2B. The key is discarded after being used, as indicated by block 207 in FIG. 2B. A determination is then made as to whether there is more protected content to be decrypted, as indicated by block 208 in FIG. 2B. If so, the process returns to block 204 in FIG. 2B and a request for a new, or updated, key is sent to the UICC.

Known techniques exist for establishing a secure session between the UICC and the terminal. For example, the method disclosed in Patent Application Publication No. US 2004/0157584 for establishing and managing a trust relationship between a SIM and a terminal of a mobile device may be used for this purpose. In accordance with the exemplary embodiment described above with reference to FIGs. 2A and 2B, it is important for the channel between the UICC and the terminal to be secure in order to prevent someone from obtaining the low-level key being transmitted from the UICC to the terminal. If the low-level key is transmitted in the clear (i.e., non-protected), it is possible for an unauthorized person to obtain the key and use it to access protected content, especially in cases where the low-level key may need to be sent repeatedly, as may be the case with the embodiments described above with reference to FIGS. 2A and 2B.

By only transmitting the key during a secure session, the possibility of an unauthorized person accessing of the key is eliminated or at least greatly reduced. The secure session channel between the UICC and terminal can be configured to prevent undetected replay of the key to the terminal. Such replay may be unauthorized by the UICC. Furthermore, the UICC may be oblivious of such replay attempts. A correctly implemented secure session can, however, result in the terminal rejecting such unauthorized messaging attempts regardless of their source. In addition, the secure channel may also be used to authenticate the origin and authenticity of keys and their association with specific applications or data sets, as authorized by the UICC.

It should be noted that various modifications may be made to the algorithms represented by the flowcharts shown in FIGS. 2A and 2B and still achieve the goals of the invention. For example, while block 106 in FIG. 2A represents the UICC making the determination as to whether the key has expired, this determination may instead be made by the terminal or some other device. Alternatively, the terminal may be used as a proxy by the UICC to communicate with another entity that makes this determination.

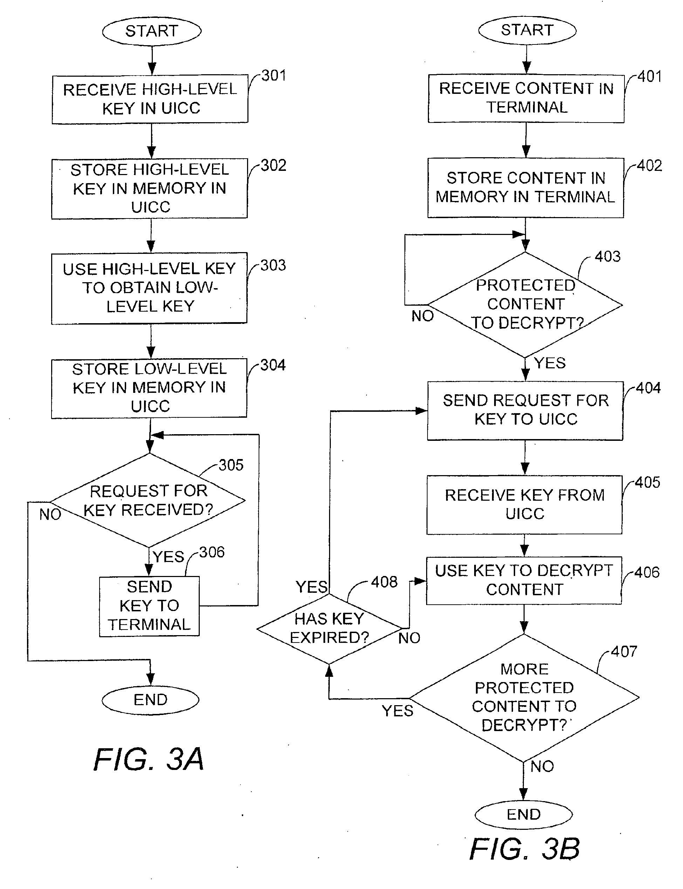

FIGS. 3A and 3B illustrate flowcharts that represent the method of the invention in accordance with another exemplary embodiment performed by the UICC and by the terminal, respectively, for limiting the ability of a terminal to replay protected content. This embodiment obviates the need for mutually-authenticated secure session set-up specifically between the UICC and the terminal. The self-contained incorporation of expiration-setting data in the low-level key delivery messaging ensures that unauthorized replay of such messages will not result in unwarranted extension of low-level key usage by the terminal.

Furthermore, in accordance with this exemplary embodiment, any attempt to substitute or alter expiration-setting data without knowledge of the low-level key is assured to not result in delivery of correct low-level keys to the terminal. In a particular instantiation of this exemplary embodiment, a public key of a public-and-private key-pair associated with the terminal is used by the UICC to encrypt the matched low-level keys and expiration-setting data, which assures confidentiality of the low-level keys against eavesdropping on the channel between the UICC and terminal. While the use in this manner of the terminal public key does not provide for authentication of the source of the key-delivery data or of the origin and integrity of the keys and their association to specific applications or data sets, it is known in the art to have the UICC relay such authentication on behalf of the content service provider. The use of content service provider-generated digital signatures in this regard prevents the UICC from undetectably altering or substituting/counterfeiting such authentication.

It is also known that expiration-setting data may directly include date-time parameters or may be based on monotone-increasing sequence numbers. In the latter case, reused sequence numbers are rejected by the terminal as stale. The terminal uses the low-level key in each accepted message for a pre-determined period of time before expiring the associated sequence number as invalid. As with the embodiment described above with reference to FIGs. 2A and 2B, in accordance with this embodiment, the low-level key is transient in that it expires after a period of time. After the key expires, it is no longer valid and therefore cannot be used to unlock protected content or application programs.

With reference to FIG. 3A, when the user device receives protected content and the high-level key from some source, the high-level key is received in the UICC, as indicated by block 301 in FIG. 3A. As described above, the source of the content and high-level key may be, for example, a cable television provider, an MSO, a content server in a wired or wireless network, a content server on the Internet, another user device, etc. The content is received in the terminal, as indicated by block 401 in FIG. 3B. The high-level key is stored in memory in the UICC, as indicated by block 302 in FIG. 3A. The UICC uses the high-level key to obtain the low-level key, as indicated by block 303 in FIG. 3A. As described above, the high-level key is used by the UICC to obtain the low-level keys from the ECMs. The low-level key is stored in memory in the UICC, as indicated by block 304 in FIG. 3A. The content is stored in memory in the terminal, as indicated by block 402 in FIG. 3B.

A determination is made by the terminal as to whether any protected content is to be decrypted, as indicated by block 403 in FIG. 3B. If so, the terminal sends a request for the corresponding low-level key to the UICC, as indicated by block 404 in FIG. 3B. The UICC makes a determination as to whether a request for a key has been received from the terminal, as indicated by block 305 in FIG. 3A. If so, the UICC sends the low-level key to the terminal, as indicated by block 306 in FIG. 3A. The process then returns to block 305 in FIG. 3A.

The terminal receives the low-level key from the UICC, as indicated by block 405 in FIG. 3B. The terminal uses the low-level key to decrypt the protected content, as indicated by block 406 in FIG. 3B. A determination is then made as to whether anymore protected content is to be decrypted, as indicated by block 407 in FIG. 3B. If so, a determination is made as to whether the key has expired, as indicated by block 408 in FIG. 2B. If so, the process returns to block 404 and the terminal sends a request for a key to the UICC. If the key has not expired, the process returns to block 406 and the key is used to decrypt the content. The process then returns to block 407, and continues in this loop until a determination is made at block 407 that there is no more protected content to decrypt.

Although not explicitly shown in FIG. 3B, when the key is received in the terminal, as indicated by block 405, a copy of the key may be stored in memory in the terminal such that is retained for current and subsequent use until the key has expired and thus is no longer valid. In this case, if a determination is made at block 408 that the key has not expired, the key is read from the terminal memory and sent to the decryption component, which uses the key to decrypt protected content. Alternatively, the key may be read from memory prior to a determination being made as to whether the key has expired, but only provided to the decryption component if a determination is made that the key has not yet expired. It should be noted that various modifications may be made to the algorithms represented by the flowcharts shown in FIGS. 3A and 3B and still achieve the goals of the invention. For example, while block 408 in FIG. 3B represents the terminal making the determination as to whether or not the key has expired, this determination may instead be made by the UICC or some other device, or some other entity with which the terminal communicates.

With reference again to FIG. 1, the keys are stored in the UICC 40 in memory element 60, and in terminal 10 in memory element 30. The processor 20 of the terminal 10 performs the algorithms represented by the flowcharts shown in FIGS. 2B and 3B, whereas the processor 50 of the UICC 40 performs the algorithms represented by the flowcharts shown in FIGs. 2A and 2B. These algorithms may be performed solely in hardware, or in a combination of hardware and software and/or firmware. If the algorithms are performed in software and/or firmware, the corresponding computer instructions associated with the algorithms represented by the flowcharts shown in FIGs. 2B and 3B may be stored in memory element 30. Similarly, the computer instructions associated with the algorithms represented by the flowcharts shown in FIGs. 3A and 3A may be stored in memory element 60. These memory elements 30 and 60 may be any type of computer-readable mediums including, for example, random access memory (RAM), dynamic RAM (DRAM), flash memory, read only memory (ROM) compact disk ROM (CD-ROM), digital video disks (DVDs), magnetic disks, magnetic tapes, etc.

The processor 20, memory element 30, and I/O device 21 are typically, but not necessarily, contained in a single IC in the terminal 10. The decryption component 22 may be contained in the same IC with the processor 20, memory element 30 and I/O device 21, or in a separate IC. The UICC 40 is typically a single IC that contains the processor 50, I/O device 51 and the memory element 60. The processors 20 and 50 may be any type of computational devices including, for example, microprocessors, application specific integrated circuits (ASICs), microcontrollers, logic gate arrays, etc.

Also, while the exemplary embodiments of the invention described above with reference to FIGs. 2A - 3B are directed to partitioning functions between the terminal and the UICC, it is not necessary to the invention for such partitioning to occur. All of these functions may be performed solely by circuitry in the terminal, solely by circuitry in the UICC, solely by some other circuitry in the user device, or by any combination of components in the user device. In other words, the invention is not limited with respect to how circuitry is implemented in the user device for carrying out the functions described above with reference to FIGs. 2A - 3B. Thus, the functions described above with reference to FIGs. 2A - 3B may be viewed generally as functions that are performed in circuitry in the user device, regardless of whether the circuitry is in the terminal, a UICC, or some other device.

It should be noted that while the algorithms represented by FIGS. 2A - 3B limit the ability of the terminal to replay protected content, they do not affect the ability of the terminal to replay unprotected content or application programs. This is desirable in that it allows the user device to continue to render unprotected content and application programs even if authorization to replay protected content no longer exists.

It should be noted that the invention has been described with reference to particular example embodiments for the purposes of demonstrating the principles and concepts of the invention. The invention is not limited to these exemplary embodiments. Those skilled in the art will understand, in view of the description provided herein, that modifications may be made to the embodiments described herein and that all such modifications are within the scope of the invention.

## Claims

1. An apparatus in a user device for limiting the ability of the user device to replay protected content, the apparatus comprising:
at least a first processor configured to perform an algorithm that limits the ability of the user device to use a low-level key to decrypt protected content, wherein the low-level key is valid until at least one predetermined expiration criteria is met and can be used to decrypt protected content while the key is valid, and wherein the low-level key expires and becomes invalid after the at least one predetermined expiration criteria is met and cannot be used to decrypt protected content while the key is invalid;
at least a first memory element accessible by the first processor; and
a decryption component configured to receive a valid low-level key from the first processor and use the valid low-level key to decrypt protected content.

2. The apparatus of claim 1, wherein after the decryption component uses the valid key to decrypt protected content, the key is discarded such that the key can no longer be used by the decryption component to decrypt protected content.

3. The apparatus of claim 2, wherein the first processor receives the low-level key from another component of the user device, and wherein if more protected content is to be decrypted after the key has been discarded, the first processor obtains an updated low-level key from said another component and provides the updated low-level key to the decryption component for use by the decryption component to decrypt protected content.

4. The apparatus of claim 3, wherein prior to said another component providing the updated low-level key to the first processor, said another component determines whether the at least one predetermined expiration criteria has been met and only provides the updated low-level key to the first processor if the at least one predetermined expiration criteria has not been met.

5. The apparatus of claim 4, wherein said another component is a Universal Integrated Circuit Card (UICC), the UICC including a processor and a memory element, the low-level key being stored in the memory element of the UICC, and wherein the processor of the UICC determines whether the at least one predetermined expiration criteria has been met, and if the at least one predetermined expiration criteria has not been met, reads the updated low-level key from the memory element of the UICC and provides the updated low-level key to the first processor.

6. The apparatus of claim 1, wherein the low-level key is a control word (CW) that has been obtained from an Entitlement Control Message (ECM) transmitted over a communications channel and received by the user device.

7. The apparatus of claim 1, wherein a copy of the low-level key is stored in the first memory element, and wherein after the decryption component uses the low-level key to decrypt protected content, the first processor determines whether or not there is more protected content to be decrypted, and wherein if the first processor determines that there is more protected content to be decrypted, the first processor reads the low-level key from the first memory element and provides the low-level key to the decryption component for use by the decryption component to decrypt said more protected content.

8. The apparatus of claim 7, wherein prior to the first processor reading the key from the first memory element and providing the key to the decryption component, the first processor determines whether or not the at least one predetermined expiration criteria has been met, and wherein if the first processor determines that the at least one predetermined expiration criteria has not been met, the first processor provides the key read from the first memory element to the decryption component for use by the decryption component to decrypt protected content.

9. The apparatus of claim 1, further comprising:
at least a second memory element, a copy of the low-level key being stored in the second memory element;
at least a second processor in communication with the first processor and the second memory element, the second processor being configured to perform an algorithm that cooperates with the algorithm performed by the first processor to limit the ability of the user device to use the low-level key to decrypt protected content, the first processor receiving the low-level key from the second processor.

10. The apparatus of claim 9, wherein after the decryption component uses the valid key to decrypt protected content, the key is discarded such that the key can no longer be used by the decryption component to decrypt protected content.

11. The apparatus of claim 10, wherein after the first processor sends the valid low-level key to the decryption component, the first processor determines whether or not there is more protected content to be decrypted, and wherein if the first processor determines that there is more protected content to be decrypted, the first processor requests an updated low-level key from the second processor, and wherein prior to the second processor sending the low-level key to the first processor, the second processor determines whether or not the at least one predetermined expiration criteria has been met, wherein if the second processor determines that the at least one predetermined expiration criteria has not been met, the second processor reads the key from the second memory element and sends the key to the first processor.

12. The apparatus of claim 9, wherein a copy of the low-level key is stored in the first memory element, and wherein after the first processor sends the valid low-level key to the decryption component, the first processor determines whether or not there is more protected content to be decrypted, and wherein if the first processor determines that there is more protected content to be decrypted, the first processor determines whether or not the at least one predetermined expiration criteria has been met, and wherein if the first processor determines that the at least one predetermined expiration criteria has not been met, the first processor reads the low-level key from the first memory element and provides the low-level key the decryption component for use by the decryption component to decrypt protected content.

13. The apparatus of claim 9, wherein the second processor and the second memory element are components of a Universal Integrated Circuit Card (UICC).

14. The apparatus of claim 9, wherein the low-level key is a control word (CW) that has been obtained from an Entitlement Control Message (ECM) transmitted over a communications channel and received by the user device.

15. A method for use in a user device for limiting the ability of the user device to replay protected content, the method comprising:
in a first processor, performing an algorithm that limits the ability of the user device to use a low-level key to decrypt protected content, wherein the low-level key is valid until at least one predetermined expiration criteria is met, wherein the key can be used by a decryption component of the user device to decrypt protected content while the key is valid, and wherein the low-level key expires and becomes invalid after the at least one predetermined expiration criteria is met, and wherein the key cannot be used by the decryption component to decrypt protected content while the key is invalid.

16. The method of claim 15, further comprising:
after the key has been used by the decryption component to decrypt protected content, discarding the key such that the key can no longer be used by the decryption component to decrypt protected content.

17. The method of claim 16, wherein the first processor receives the low-level key from another component of the user device, the method further comprising:
determining if more protected content is to be decrypted after the key has been discarded; and
if more protected content is to be decrypted, in the first processor, receiving an updated low-level key from said another component and providing the updated low-level key to the decryption component for use by the decryption component to decrypt protected content.

18. The method of claim 17, wherein prior to said another component providing the updated low-level key to the first processor, determining, in said another component, whether the at least one predetermined expiration criteria has been met and only providing the updated low-level key to the first processor if the at least one predetermined expiration criteria has not been met.

19. The method of claim 18, wherein said another component is a Universal Integrated Circuit Card (UICC), the UICC including a processor and a memory element, the method further comprising:
storing the low-level key being in the memory element of the UICC; and
if the processor of the UICC determines that the at least one predetermined expiration criteria has not been met, reading the updated low-level key from the memory element of the UICC into the processor of the UICC and causing the updated low-level key to be sent to the first processor.

20. The method of claim 15, wherein the low-level key is a control word (CW) that has been obtained from an Entitlement Control Message (ECM) transmitted over a communications channel and received by the user device.

21. The method of claim 15, further comprising:
storing a copy of the low-level key in the first memory element;
after the decryption component uses the low-level key to decrypt protected content, determining, in the first processor, whether or not there is more protected content to be decrypted; and
if the first processor determines that there is more protected content to be decrypted, reading, into the first processor, the low-level key from the first memory element and providing the low-level key to the decryption component for use by the decryption component to decrypt said more protected content.

22. The method of claim 21, further comprising:
prior to the first processor reading the key from the first memory element and providing the key to the decryption component, determining, in the first processor, whether or not the at least one predetermined expiration criteria has been met; and
if the first processor determines that the at least one predetermined expiration criteria has not been met, providing the key read from the first memory element to the decryption component for use by the decryption component to decrypt protected content.

23. A computer program for execution by a terminal of a user device for limiting the ability of the user device to replay protected content, the program comprising instructions that are stored on a computer-readable medium, the program comprising:
instructions for performing an algorithm in a first processor that limits the ability of the user device to use a low-level key to decrypt protected content, wherein the low-level key is valid until at least one predetermined expiration criteria is met and can be used to decrypt protected content while the key is valid, and wherein the low-level key expires and becomes invalid after the at least one predetermined expiration criteria is met and cannot be used to decrypt protected content while the key is invalid; and
instructions for sending a valid low-level key from the first processor to a decryption component for use by the decryption component to decrypt protected content.

24. The program of claim 23, further comprising:
instructions for causing the key to be discarded after the decryption component uses the valid key to decrypt protected content such that the key can no longer be used by the decryption component to decrypt protected content.

25. The program of claim 24, wherein the first processor receives the low-level key from another component of the user device, the program further comprising:
instructions for determining if more protected content is to be decrypted after the key has been discarded;
if a determination is made that there is more protected content to decrypt, making a request by the first processor to said another component for an updated low-level key;
instructions for receiving an updated low-level key in the first processor sent by said another component; and
instructions for providing the updated low-level key to the decryption component for use by the decryption component to decrypt protected content.

26. A computer program for execution by a Universal Integrated Circuit Card (UICC) of a user device for limiting the ability of the user device to replay protected content, the program of the UICC comprising instructions that are stored on a computer-readable medium, the UICC program operating in conjunction with the program of claim 24, the UICC corresponding to said another component, the UICC program comprising:
instructions for sending an updated low-level key from a processor of the UICC to said first processor when a request for an updated low-level key is received in the UICC from the first processor;
instructions for determining in the processor of the UICC whether the at least one predetermined expiration criteria has been met prior to the processor of the UICC sending the updated low-level key to said first processor; and
instructions for sending the updated low-level key from the processor of the UICC to said first processor if the at least one predetermined expiration criteria has not been met.

27. The UICC program of claim 26, further comprising:
instructions for storing the low-level key in a memory element of the UICC; and
instructions for reading the updated low-level key from the memory element of the UICC into the processor of the UICC if the processor of the UICC determines that the at least one predetermined expiration criteria has not been met; and
instructions for causing the updated low-level key read from the memory element of the UICC to be sent to said first processor.

28. The program of claim 23, wherein the low-level key is a control word (CW) that has been obtained from an Entitlement Control Message (ECM) transmitted over a communications channel and received by the user device.

29. The program of claim 23, further comprising:
instructions for storing a copy of the low-level key in a first memory element of the terminal;
instructions for determining, in the first processor, whether or not there is more protected content to be decrypted after the decryption component has used the low-level key to decrypt protected content;
instructions for reading, into the first processor, the low-level key from the first memory element if the first processor determines that there is more protected content to be decrypted; and
instructions for sending the low-level key read from the first memory element from the first processor to the decryption component for use by the decryption component to decrypt said more protected content.

30. The program of claim 29, further comprising:
instructions for determining, in the first processor, whether or not the at least one predetermined expiration criteria has been met prior to the first processor reading the key from the first memory element and providing the key to the decryption component, and wherein the key read from the first memory element is only sent to the decryption component if the first processor determines that the at least one predetermined expiration criteria has not been met.
